# EUROPEAN PATENT SPECIFICATION

(11) **EP 3 032 839 B1**
(45) Date of publication and mention of the grant of the patent: **17.10.2018**
(21) Application number: 15198466.3
(22) Date of filing: 08.12.2015
(51) Int. Cl.: H04N 21/488, H04N 21/472, H04N 21/439, H04N 21/443, G06F 3/16, G06F 3/048

(54) **DEVICE AND METHOD FOR CONTROLLING SOUND OUTPUT**
VORRICHTUNG UND VERFAHREN ZUR KONTROLLIERTEN TONAUSGABE
DISPOSITIF ET PROCEDE DE SORTIE AUDIO CONTROLÉ

(30) Priority: 12.12.2014 KR 20140179356
(43) Date of publication of application: 15.06.2016
(73) Proprietor: Samsung Electronics Co., Ltd., Gyeonggi-do 16677 (KR)
(72) Inventor: JANG, Ju-yun, Gyeonggi-do (KR); RYU, Yang-sun, Gyeonggi-do (KR); HAHM, Cheul-hee, Gyeonggi-do, (KR)
(74) Representative: Appleyard Lees IP LLP

(56) References cited:
- US-A- 5 666 555
- US-A1- 2004 056 885
- US-A1- 2014 245 148

## Description

### BACKGROUND

### 1. Field

The present disclosure relates to devices and methods for controlling a sound output, and more particularly, to devices and methods for controlling a sound output and a subtitle output of a plurality of pieces of content when reproducing the plurality of pieces of content in a plurality of windows.

### 2. Description of the Related Art

As various terminals such as personal computers, laptop computers, smart TVs, cellular phones, etc. provide multifunctional and various functions, there is a trend to providing a multi-window function. The multi-window function means a function of splitting a screen into a plurality of areas and independently displaying a plurality of pieces of content or application programs simultaneously.

There is a recent need for research into a method in which a terminal providing the multi-window function provides a user with a more convenient watching environment. US 2004/056885 A1 relates to a multichannel information processing device and US 2014/245148 A1 relates to video tiling.

### SUMMARY

Provided are devices and methods for controlling a sound output and a subtitle output of a plurality of pieces of content when reproducing the plurality of pieces of content on a plurality of windows on the device.

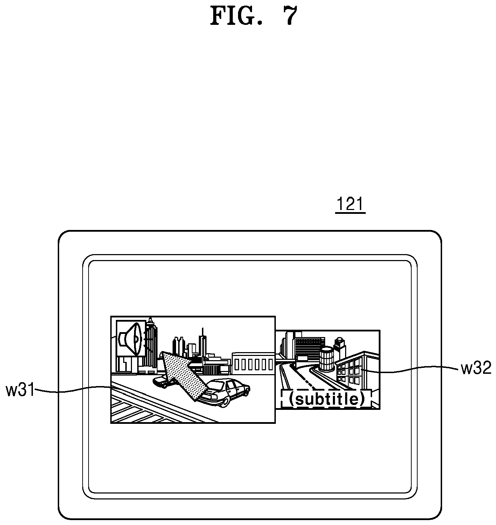

Additional aspects will be set forth in part in the description which follows and, in part, will be apparent from the description, or may be learned by practice of the presented exemplary embodiments. According to the present invention there is provided an apparatus and method as set forth in the appended claims. Other features of the invention will be apparent from the dependent claims, and the description which follows. Enabling disclosure for the invention is found in embodiment of Figure 7. The remaining embodiments are to be understood as examples which do not describe parts of the present invention.

According to an aspect of an exemplary embodiment, a device includes: a sound output unit configured to output sound of content; a display unit configured to display a plurality of windows; and a control unit configured to, when a user input signal that selects one of the plurality of windows is received, output sound of content being reproduced on the selected window through the sound output unit and discontinue outputting sound of content being reproduced on the plurality of windows, except for the selected window (i.e. on all other windows).

Based on the user input signal, the control unit may display subtitles of the content being reproduced on the plurality of windows, except for the selected window, on areas of the display unit corresponding to the plurality of windows.

The control unit may display subtitles of the content being reproduced on the selected window, on a previously determined portion of an entire area of the display unit, based on the user input signal.

The control unit may display subtitles of the content being reproduced on the selected window such that the displayed subtitles do not overlap with an image of the content being reproduced on the selected window, based on the user input signal.

The control unit may enlarge and display the selected window when the user input signal is received.

The control unit may rearrange the windows among the plurality of windows, except for the selected window, when the user input signal is received.

The control unit may discontinue outputting the sound of the content being reproduced on the selected window and output sound of content being reproduced on another window when a user input signal that selects the other window is received. The other window may be distinguished from the selected window.

The control unit may set one of the plurality of windows as a sub-window, set one of the plurality of windows that is distinguished from the sub-window as a main window, and display the sub-window on the main window. The sub-window may overlap the main window.

The control unit may display subtitles of content being reproduced on the sub-window on a previously determined portion of an entire area of the display unit when a user input signal that selects the sub-window is received.

According to an aspect of another exemplary embodiment, a method includes: displaying a plurality of windows on a display unit; receiving a user input signal that selects one of the plurality of windows; outputting, through a sound output unit, sound of content being reproduced on the selected window; and discontinue outputting sound of content being reproduced on the plurality of windows, except for the selected window (i.e. on all other windows).

The method may further include: displaying subtitles of the content being reproduced on the plurality of windows, except for the selected window, on areas of the display unit corresponding to the plurality of windows, based on the user input signal.

The method may further include: displaying subtitles of the content being reproduced on the selected window, on a previously determined portion of an entire area of the display unit, based on the user input signal.

The method may further include: displaying subtitles of the content being reproduced on the selected window such that the displayed subtitles do not overlap with an image of the content being reproduced on the selected window, based on the user input signal.

The method may further include: enlarging and displaying the selected window when the user input signal is received.

The enlarging and displaying of the selected window may include rearranging the windows among the plurality of windows, except for the selected window, when the user input signal is received.

The method may further include: discontinuing outputting the sound of the content being reproduced on the selected window and outputting sound of content being reproduced on another window when a user input signal that selects the other window is received.The other window may be distinguished from the selected window.

The displaying of the plurality of windows may include: setting one of the plurality of windows as a sub-window, setting one of the plurality of windows that is distinguished from the sub-window as a main window, and displaying the sub-window on the main window. The sub-window may overlap the main window.

The method may further include: displaying subtitles of content being reproduced on the sub-window on a previously determined portion of an entire area of the display unit when a user input signal that selects the sub-window is received.

### BRIEF DESCRIPTION OF THE DRAWINGS

These and/or other aspects will become apparent and more readily appreciated from the following description of the exemplary embodiments, taken in conjunction with the accompanying drawings in which:
FIGS. 1A and 1B are diagrams for describing an exemplary embodiment;
FIG. 2 is a flowchart for describing an exemplary embodiment;
FIG. 3 is a flowchart for describing an example of displaying subtitles of content that are being reproduced on a plurality of windows according to an exemplary embodiment;
FIG. 4 is a flowchart for describing an example of displaying subtitle of content that is being reproduced on a window selected by a user according to an exemplary embodiment;
FIG. 5 is a diagram for describing an example of displaying subtitle of content that is being reproduced on a window selected by a user according to an exemplary embodiment;
FIG. 6 is a flowchart for describing an example of enlarging and displaying a window selected by a user according to an exemplary embodiment;
FIG. 7 is a diagram for describing an example of enlarging and displaying a window selected by a user according to an exemplary embodiment;
FIG. 8 is a diagram for describing another example of displaying subtitle of content that is being reproduced on a selected window according to an exemplary embodiment;
FIGS. 9A and 9B are diagrams for describing another example of enlarging and displaying a selected window according to an exemplary embodiment;
FIG. 10 is a diagram for describing an example of displaying a main window and a sub-window according to an exemplary embodiment;
FIGS. 11A and 11B are diagrams for describing an example of changing a number of a plurality of windows according to an exemplary embodiment; and
FIGS. 12 and 13 are block diagrams illustrating a device according to exemplary embodiments.

### DETAILED DESCRIPTION

Reference will now be made in detail to exemplary embodiments, examples of which are illustrated in the accompanying drawings. In this regard, the present exemplary embodiments may have different forms and should not be construed as being limited to the descriptions set forth herein. Accordingly, the exemplary embodiments are merely described below, by referring to the figures, to explain aspects of the inventive concept. Throughout the specification, like reference numerals refer to like elements. As used herein, the term "and/or" includes any and all combinations of one or more of the associated listed items. Expressions such as "at least one of," when preceding a list of elements, modify the entire list of elements and do not modify the individual elements of the list.

In the following description, well-known functions or constructions are not described in detail since they would obscure the invention with unnecessary detail. Also, while terms "first" and "second" are used to describe various components, it is obvious that the components are not limited to the terms "first" and "second". The terms "first" and "second" are used only to distinguish between each component.

Hereinafter, a device related to one or more exemplary embodiments is described in detail with reference to drawings. In the following description, terms such as "module" and "unit" that are used for elements do not have their own individual meanings or functions in isolation, but have meanings in the context as described

Throughout the specification, a device may include a fixed terminal such as a digital television (TV), a desktop computer, etc. The device may also include a cellular phone, a smartphone, a tablet personal computer (PC), a laptop computer, a digital broadcasting terminal, a personal digital assistant (PDA), a portable multimedia player (PMP), a navigation device, etc.

Throughout the specification, it will also be understood that when an element is referred to as being "connected to" or "coupled with" another element, it can be directly connected to or coupled with the other element, or it can be electrically connected to or coupled with the other element by having an intervening element interposed therebetween. Also, when a part "includes" or "comprises" an element, unless there is a particular description contrary thereto, the part can further include other elements, not excluding the other elements.

Hereinafter, terms used in the specification are briefly described.

Throughout the specification, 'content' may mean a predetermined moving image. The moving image may be a broadcasting stream that is input through a TV tuner, a moving image file stored in a device, a moving image file that is receivable from an external storage medium but is not limited thereto.

The content may include subtitle information of corresponding content. The subtitle information may include information regarding text generated by converting sound information of the corresponding content into text.

The subtitle information may be displayed by being added to an image of content. That is, the subtitle information may be displayed to overlap with the image of the content or may be displayed on a specific area so as not to overlap with the image. Hereinafter, one or more exemplary embodiments will be described in detail with reference to the attached drawings.

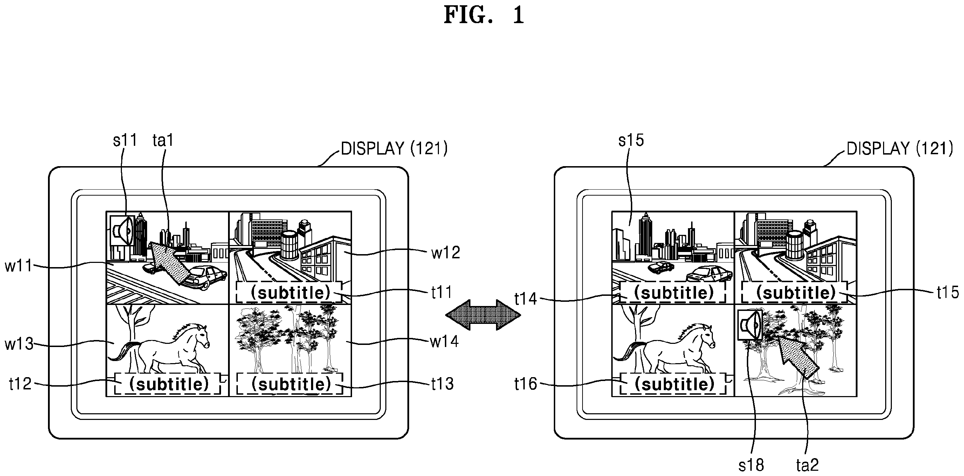

FIGS. 1A and 1B are diagrams for describing an exemplary embodiment.

A display unit 121 of a device 100 according to an exemplary embodiment may provide a multi-window function.

The multi-window function means a function of splitting a screen into a plurality of areas and independently displaying a plurality of pieces of content or application programs simultaneously.

According to the present exemplary embodiment, the device 100 may reproduce the plurality of pieces of content on a plurality of respective windows configured as a multi-window function or view. The device 100 may output sound of one of the plurality of pieces of content that are being reproduced according to a user selection and may stop outputting sound of the content that is being reproduced on other windows. Thus, sound information of one piece of content may be more accurately provided to a user.

The device 100 may display subtitle information of the content, other than the content of which sound information is outputting, on the display unit 121, thereby providing the user with information regarding corresponding content.

That is, according to the present exemplary embodiment, the user may obtain the sound information of the one content according to the user selection and may simultaneously obtain the subtitle information of the other content while watching a plurality of images through the multi-window, and thus information regarding the plurality of pieces of content may be more accurately and conveniently provided to the user. FIG. 1A illustrates an example of selecting a first window w11 when predetermined content is being reproduced on each of a plurality of windows w11, w12, w13, and w14. The device 100 may output sound information of content that is being reproduced on the first window w11 through a sound output unit 122. An icon ta1 in the form of an arrow shown on the first window w11 is used to indicate that the first window w11 is selected and the form thereof is not limited thereto.

A first icon s11 displayed on the first window w11 is an icon indicating that the sound information of the content that is being reproduced on the first window w11 is being output. A form of the icon indicating the sound information is being output is not limited thereto and may not be displayed. When the first window w11 is selected, the device 100 may stop outputting sound of the content that is being reproduced on each of the other/remaining windows w12, w13, and w14.

When the first window w11 is selected, the device 100 may display subtitle information of the content that is being reproduced on the windows w12, w13, and w14, other than the first window w11, on areas t11, t12, and t13 respectively corresponding to the windows w12, w13, and w14 on the display unit 121. FIG. 1B illustrates an example of selecting the fourth window w14 when predetermined content is being reproduced on each of the plurality of windows w11, w12, w13, and w14.

If the device 100 receives an input to select the fourth window w14 when outputting the sound information of the content that is being reproduced on the first window w11, the device 100 may stop outputting the sound of the content that is being reproduced on the first window w11 and may output sound information of content that is being reproduced on the fourth window w14 through the sound output unit 122. The device 100 may also display subtitle information of the content that is being reproduced on the first window w11 on a partial area t14 of the first window w11. That is, the device 100 may provide content information via the subtitle information after stopping outputting the sound of the content that is being reproduced on the first window w11.

An icon ta2 in the form of the arrow shown on the fourth window w14 is used to indicate that the fourth window w14 is selected as a window on which sound is to be output. An icon s18 displayed on the fourth window w14 is used to indicate that the sound of the content that is being reproduced on the fourth window w14 is being output.

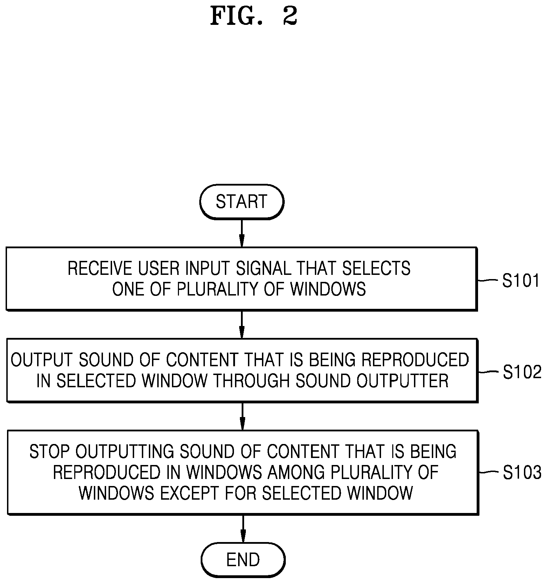

FIG. 2 is a flowchart for describing an exemplary embodiment.

In operation S101, a control unit 130 of the device 100 may receive a user input signal that selects one of a plurality of windows through a user input unit 110. A user may select a window on which content of which sound is to be output is being reproduced from among a plurality of pieces of content that are being reproduced on the plurality of windows.

For example, the user input signal may be a signal having a remote controller that transmits a control signal to a TV as an input unit or a signal having a mouse, a keyboard, etc. that transfers the control signal to a computer as the input unit but is not limited thereto. For example, the user input signal may be a user touch input on a touch screen. In operation S102, the control unit 130 of the device 100 may output the sound of the content that is being reproduced on the selected window through the sound output unit 122.

In operation S103, the control unit 130 of the device 100 may discontinue outputting sound of content being reproduced on the plurality of windows, except for the selected window (i.e. on/of the remaining windows).

That is, the device 100 may output sound only of content that is being reproduced on a single window selected by a user and stop outputting sound of other windows, thereby more accurately providing the user with sound information of a single piece of content.

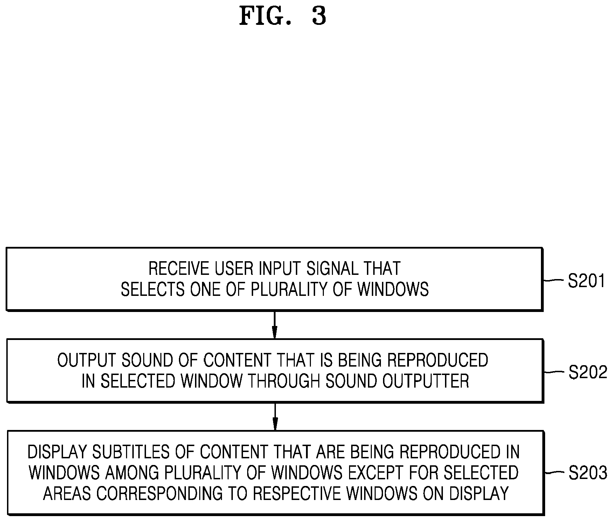

FIG. 3 is a flowchart for describing an example of displaying subtitles of content that are being reproduced on a plurality of windows according to an exemplary embodiment.

In operation S201, the control unit 130 of the device 100 may receive a user input signal that selects one of the plurality of windows through the user input unit 110.

In operation S202, the control unit 130 of the device 100 may output sound of content that is being reproduced on the selected window through the sound output unit 122.

In operation S203, the control unit 130 of the device 100 may display the subtitles of the content that are being reproduced on the windows among the plurality of windows except for the selected window on areas corresponding to the respective windows on the display unit 121

The device 100 according to an exemplary embodiment may display subtitle information including text generated by converting sound information with respect to content being reproduced, on windows other than a window for which sound is being output, thereby providing a user with content information (e.g. for those other windows).

The control unit 130 of the device 100 may preset an area on which the subtitle information of the content is to be displayed, for each window. The device 100 may display a graphic user interface, such as a predetermined icon, on a corresponding location of the display unit 121, and the graphic user interface may indicate a location on which the subtitle information is to be displayed for each window.

The subtitle information may be displayed on a partial area of a corresponding window.The subtitle information may be displayed on an external area of a corresponding window that does not overlap with content that is being reproduced on the corresponding window.

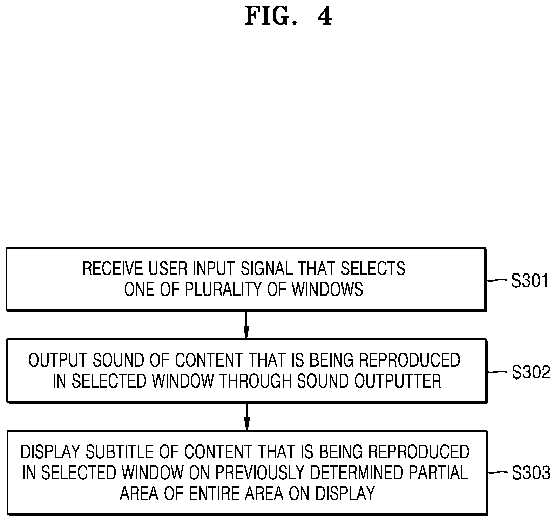

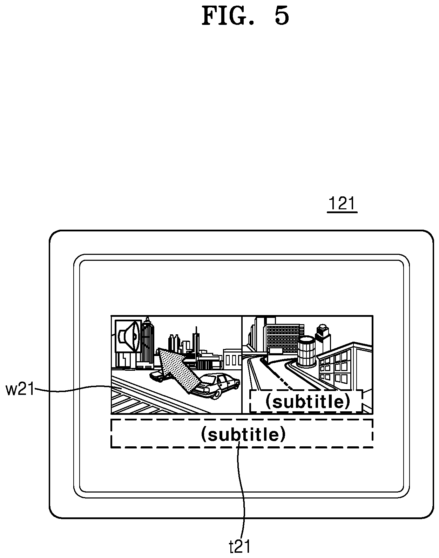

FIG. 4 is a flowchart for describing an example of displaying subtitle of content that is being reproduced on a window selected by a user according to an exemplary embodiment. FIG. 5 is a diagram for describing an example of displaying subtitle of content that is being reproduced on a window selected by a user according to an exemplary embodiment.

In operation S301 of FIG. 4, the control unit 130 of the device 100 may receive a user input signal that selects one of a plurality of windows through the user input unit 110.

In operation S302, the control unit 130 of the device 100 may output sound of the content that is being reproduced on the selected window through the sound output unit 122.

In operation S303, the control unit 130 of the device 100 may display the subtitle of the content that is being reproduced on the selected window on a previously determined partial area of an entire area on the display unit 121.

According to the present exemplary embodiment, the device 100 may display subtitle information on the display unit 121 simultaneously with output of sound with respect to the window selected to output the sound by the user from among the plurality of windows. That is, the window selected by the user may be reproducing content of high interest to the user, and thus the device 100 may simultaneously provide sound information and the subtitle information.

The control unit 130 of the device 100 may preset a location on which the subtitle is to be displayed among the entire area in correspondence with the selected window.

For example, the device 100 may display the subtitle of the content that is being reproduced on the window selected by the user on a partial area of the selected window or an external area thereof. The device 100 may provide subtitle information to an area such that the subtitle information provided therein has high readability, thereby providing the user with a more convenient watching environment.

Referring to FIG. 5, the device 100 may display subtitle information of content that is being reproduced on a first window w21 that is selected to output sound by the user on an external area t21 of the first window w21 (e.g. external to the window). That is, the device 100 may display the subtitle information on an area that does not hide an image of the content that is being reproduced on the first window w21, thereby providing the subtitle information while not hiding the image of the content of high interest to the user.

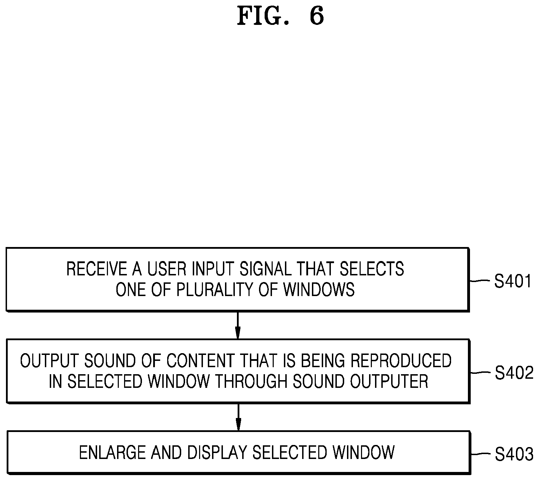

FIG. 6 is a flowchart for describing an example of enlarging and displaying a window selected by a user according to an exemplary embodiment. FIG. 7 is a diagram for describing an example of enlarging and displaying a window selected by a user according to an exemplary embodiment.

In operation S401 of FIG. 6, the control unit 130 of the device 100 may receive a user input signal that selects one of a plurality of windows through the user input unit 110.

In operation S402, the control unit 130 of the device 100 may output sound of the content that is being reproduced on the selected window through the sound output unit 122.

In operation S403, the control unit 130 of the device 100 may enlarge and display the selected window.

According to the present exemplary embodiment, the control unit 130 of the device 100 may enlarge and display a size of the window that is selected to output sound among the plurality of windows. That is, the device 100 may enlarge the size of the window such that content of high interest to the user is reproduced on the window with high readability in comparison to the other windows.

FIG. 7 illustrates the example of enlarging and displaying a size of a first window w31 and reducing and displaying a size of a second window w32 when sound of content that is being reproduced on the first window w31 is selected to be output.

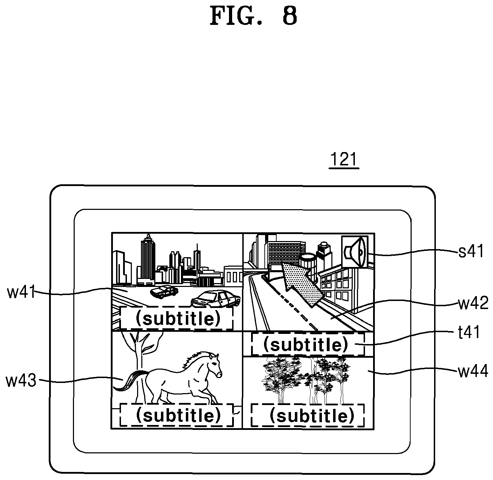

FIG. 8 is a diagram for describing another example of displaying subtitle of content that is being reproduced on a selected window according to an exemplary embodiment.

Referring to FIG. 8, when a second window w42 is selected from a plurality of windows w41, w42, w43, and w44, the device 100 may display subtitle information on an external area t41 of the second window w41 (i.e. external to that window) simultaneously with output s41 of sound of content that is being reproduced on the second window w42. The device 100 may display the subtitle information corresponding to the second window w42 on the external area t41 of the second window w41, thereby increasing readability of a user with respect to subtitle while not hiding an image of the content that is being reproduced on the second window w42.

Accordingly, a size of the fourth window w44 may be reduced, for example to provide space for display of subtitles while not hiding or obscuring the image of the context.

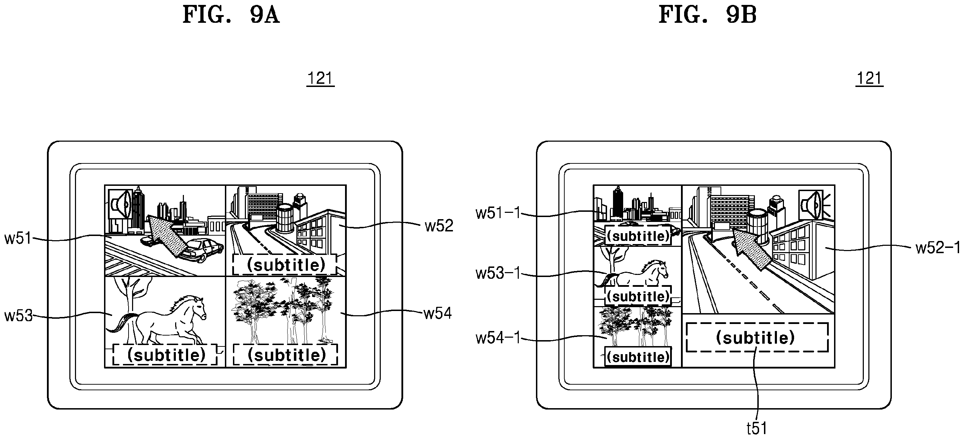

FIGS. 9A and 9B are diagrams for describing another example of enlarging and displaying a selected window according to an exemplary embodiment.

FIG. 9A illustrates an example of selecting a first window w51 to output sound corresponding to content on the first window w51 among a plurality of windows w51, w52, w53, and w54.

FIG. 9B illustrates an example of selecting the second window w52-1 to output sound corresponding to content on the second window w52-1 among the plurality of windows w51-1, w52-1, w53-1, and w54-1. The device 100 may stop outputting for sound on the first window w51-1 and may output the sound of content that is being reproduced on the second window w52-1 through the sound output unit 122.

The device 100 may enlarge and display a second window w52-1 and may reduce and rearrange other windows w51-1, w53-1, and w54-1 in a left area of the display unit 121.

The device 100 may subtitle information of content that is being reproduced on the second window w52-1 in an external area t51 of the second window w52-1.

That is, the device 100 according to the present exemplary embodiment may enlarge and display a window selected by a user and display subtitle information not to overlap with content, thereby increasing readability of content which the user is interested in.

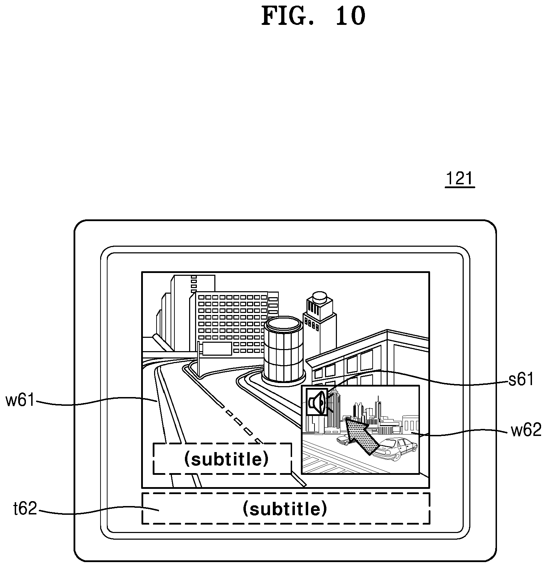

FIG. 10 is a diagram for describing an example of displaying a main window w61 and a sub-window w62 according to an exemplary embodiment.

The device 100 according to the present exemplary embodiment may provide a picture in picture (PIP) function. The PIP function means a function of simultaneously displaying a small screen, separately from a main screen, on the main screen.

Referring to FIG. 10, the control unit 130 of the device 100 according to the present exemplary embodiment may set one of a plurality of windows as the sub-window w62 and one of the windows that is distinguished from the sub-window w62 as the main window w61, and may overlap and display the sub-window w62 on the main window w61. In another example, the sub-window may not overlap, and may be displayed outside of the main window.

If the control unit 130 of the device 100 receives a user input signal that selects the sub-window w62, the control unit 130 of the device 100 may display subtitles of content that are being reproduced on the sub-window w62 on a previously determined partial area of an entire area on the display unit 121.

That is, the device 100 may display subtitle information of the content that is being reproduced on the sub-window w62 on an external area t62 of (i.e. external to) the window w61 and w62 in order to increase readability of a user.

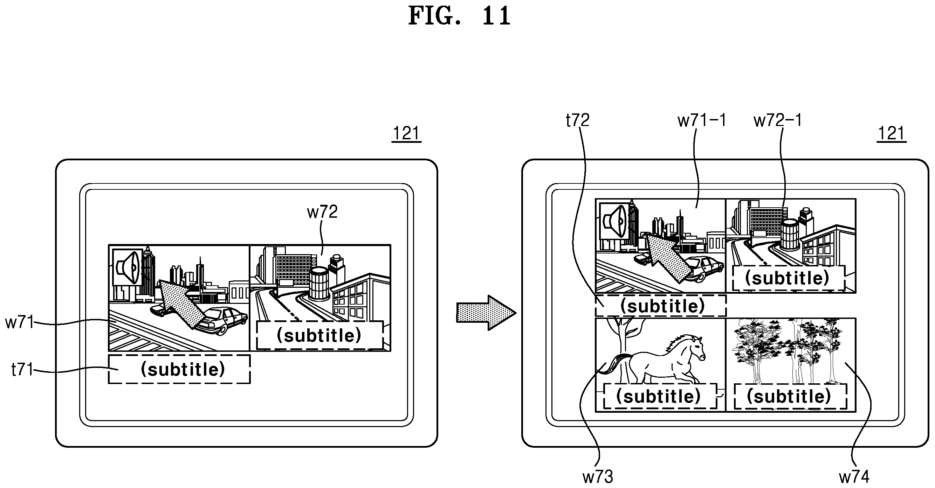

FIGS. 11A and 11B are diagrams for describing an example of changing a number of a plurality of windows according to an exemplary embodiment.

As shown in FIGS. 11A and 11B, the control unit 130 of the device 100 may change the number of the plurality of windows and display the windows on the display unit 121. FIG. 11A illustrates an example of displaying two windows on the display unit 121. FIG. 11B illustrates an example of displaying four windows on the display unit 121.

FIG. 11A illustrates an example of displaying subtitle information of content that is being reproduced on a first window w71 on an external area t71 of the first window w71 when the first window w71 is selected to output sound.

FIG. 11B illustrates an example in which the number of the windows is increased to four. The control unit 130 of the device 100 may continuously output sound information of content that is being reproduced on a first window w71-1 that is selected to output sound through the sound output unit 122.

The control unit 130 of the device 100 may display subtitle information corresponding to the first window w71-1 on an external area t72 of (i.e external to) the first window w71-1 such that an image displayed on the first window w71-1 may not be hidden.

As shown in FIG. 11B, subtitle information may be displayed on a preset area corresponding to each of windows w72-1, w73, and w74, except for the first window w71-1. That is, when the number of windows is increased, information of content reproduced on a newly added window may be provided through subtitle information displayed on an area corresponding to each window, and optionally within each new window..

If the control unit 130 of the device 100 receives a user input signal that selects the newly added window, the control unit 130 of the device 100 may discontinue outputting sound corresponding to content being reproduced by a window and may output, through the sound output unit 122, sound information corresponding to content being reproduced on the selected window.

The aforementioned exemplary embodiments should be considered in a descriptive sense only and not for purposes of limitation, and are not limited to an order of the operations in the flowcharts of FIGS. 2 through 4. According to other exemplary embodiments, some operations may be skipped or added, and an order of some operations may be changed.

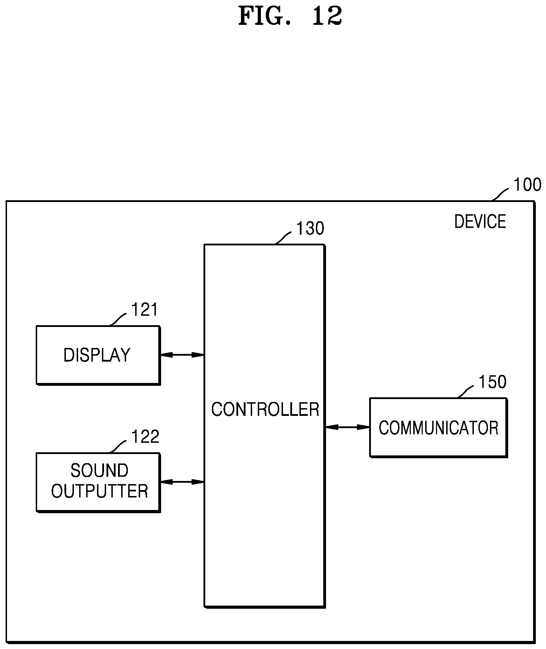

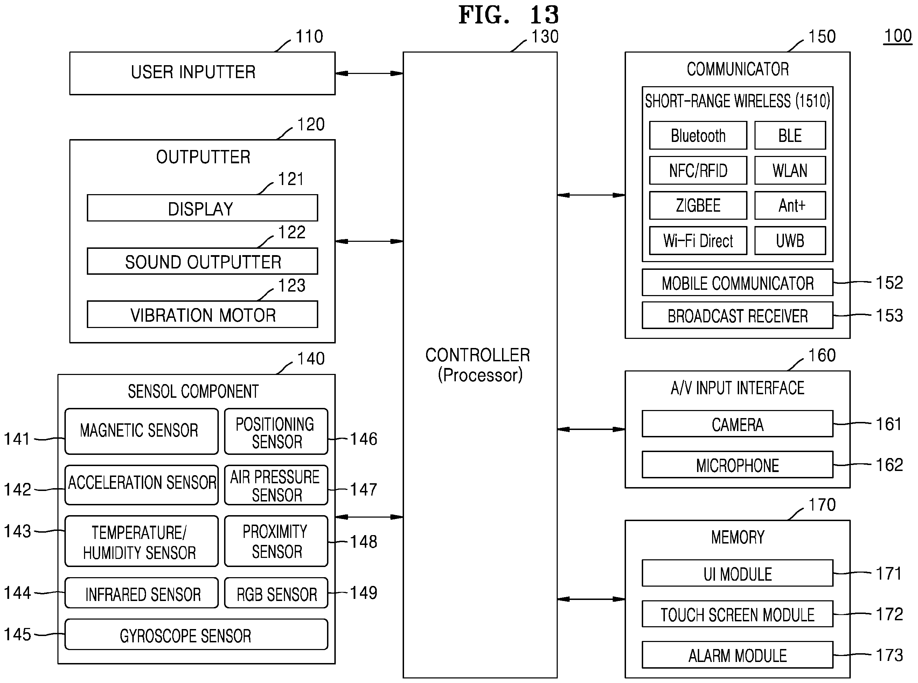

FIGS. 12 and 13 are block diagrams illustrating a device according to exemplary embodiments.

As illustrated in FIG. 12, the device 100 according to the present exemplary embodiment may include the display unit 121, the sound output unit 122, a communication unit 150, and the control unit 130. However, not all elements shown in FIG. 12 are necessary elements of the device 100. That is, the device 100 may be embodied with more or less elements than the elements shown in FIG. 12.

For example, as illustrated in FIG. 13, the device 100 may further include a user input unit 110, an output unit 120, a sensing unit 140, an audio/video (A/V) input unit 160, and a memory 170, in addition to the display unit 121, the sound output unit 122, the communication unit 150, and the control unit 130.

Hereinafter, the elements will be sequentially described.

The user input unit 110 may be a unit by which a user inputs data so as to control the device 100. For example, the user input unit 110 may include a key pad, a dome switch, a touch pad (a touch capacitive type touch pad, a pressure resistive type touch pad, an infrared beam sensing type touch pad, a surface acoustic wave type touch pad, an integral strain gauge type touch pad, a piezo effect type touch pad, or the like), a jog wheel, and a jog switch, but one or more embodiments are not limited thereto.

The user input unit 110 may include an external device that may transmit a control signal via wired/wireless communication through the communication unit 150. For example, the user input unit 110 may be a mouse, a keyboard, a remote controller, etc.

The user input unit 110 may receive a user input by being controlled by the control unit 130. For example, the user input unit 110 may receive the user input that selects one of a plurality of windows displayed on the display unit 121.

The output unit 120 may output an audio signal, a video signal, or a vibration signal by being controlled by the control unit 130, and may include the display unit 121, the sound output unit 122, a vibration motor 123, or the like.

The display unit 121 displays information that is processed in the device 100, by being controlled by the control unit 130.

The display unit 121 according to the present exemplary embodiment may include or be used to provide a plurality of windows configuring a multi-window. The display unit 121 may change the number of the plurality of windows and display the windows.

The display unit 121 may enlarge or reduce and display the windows, by being controlled by the control unit 130. The display unit 121 may rearrange and display the plurality of windows, by being controlled by the control unit 130.

The display unit 121 may display subtitle information of content, by being controlled by the control unit 130. The display unit 121 may display the subtitle information of the content on a window. The display unit 121 may display the subtitle information of the content on an external area of the window.

The display unit 121 may overlap and display one window on another window, by being controlled by the control unit 130.

Meanwhile, when the display unit 121 and a touch pad form a mutual layer structure and then are formed as a touch screen, the display unit 121 may be used as both an output device and input device. The display unit 121 may include at least one of liquid crystal display (LCD), a thin film transistor-liquid crystal display (TFT-LCD), an organic light-emitting diode (OLED) display, a flexible display, a three-dimensional (3D) display, and an electrophoretic display. Also, according to a type of the device 100, the device 100 may include at least two display units 121. In this regard, the at least two display units 121 may be disposed to face each other by using a hinge.

The sound output unit 122 may output audio data that is received from the communication unit 150 or is stored in the memory 170. The sound output unit 122 may also output a sound signal (e.g., a call signal receiving sound, a message receiving sound, a notifying sound, or the like) related to capabilities performed by the device 100. The sound output unit 122 may include a speaker, a buzzer, or the like.

The sound output unit 122 according to the present exemplary embodiment may output sound information of content (for example, a moving image) that is being reproduced. For example, the sound output unit 122 may output sound information of content that is being reproduced on a window selected by a user through the user input unit 110 among the plurality of windows displayed on the display unit 121, by being controlled by the control unit 130.

The vibration motor 123 may output a vibration signal. For example, the vibration motor 123 may output the vibration signal that corresponds to an output of the audio data (e.g., the call signal receiving sound, the message receiving sound, or the like) or video data. Also, when a touch is input to the touch screen, the vibration motor 123 may output a vibration signal.

The control unit 130 may generally control all operations of the device 100. For example, the control unit 130 may control the user input unit 110, the output unit 120, the sensing unit 140, the communication unit 150, the A/V input unit 160, etc. by executing programs stored in the memory 170.

In more detail, the control unit 130 according to the present exemplary embodiment may receive a user input signal that selects one of the plurality of windows displayed on the display unit 121 through the user input unit 110.

The control unit 130 may output the sound of the content that is being reproduced on the selected window through the sound output unit 122.

The control unit 130 may stop outputting sound of content that are being reproduced on the windows among the plurality of windows, except for the selected window.

The control unit 130 may display subtitle information of the content that are being reproduced on the windows among the plurality of windows, except for the selected window, on an area of the display unit 121 corresponding to each window based on the user input signal that selects one of the plurality of windows displayed on the display unit 121 through the user input unit 110.

The control unit 130 may display subtitles of the content that is being reproduced on the selected window such that the subtitle may not overlap with an image of the content that is being reproduced on the selected window based on the user input signal that selects one of the plurality of windows displayed on the display unit 121 through the user input unit 110.

When the control unit 130 receives the user input signal that selects one of the plurality of windows displayed on the display unit 121 through the user input unit 110, the control unit 130 may enlarge and display the selected window.

When the control unit 130 receives the user input signal that selects one of the plurality of windows displayed on the display unit 121 through the user input unit 110, the control unit 130 may rearrange and display the windows among the plurality of windows except for the selected window.

The control unit 130 may set one of the plurality of windows displayed on the display unit 121 as a sub-window and set one of the plurality of windows that is distinguished from the sub-window as a main window. The control unit 130 may overlap and display the sub-window on the main window.

If the control unit 130 receives a user input signal that selects the sub-window through the user input unit 110, the control unit 130 may display subtitle of content that is being reproduced on the sub-window on a previously determined partial area of an entire are of the display unit 121. The sensing unit 140 may sense a state of the device 100 or a status around the device 100 and may transfer sensed information to the control unit 130. The sensing unit 140 may include at least one selected from a magnetic sensor 141, an acceleration sensor 142, a temperature/humidity sensor 143, an infrared sensor 144, a gyroscope sensor 145, the location sensor (e.g., GPS) 146, an air pressure sensor 147, a proximity sensor 148, and an RGB sensor (i.e., a luminance sensor) 149, but one or more exemplary embodiments are not limited thereto. Functions of the sensors may be intuitionally deduced by one of ordinary skill in the art by referring to names of the sensors, and thus, detailed descriptions thereof are omitted here.

The sensing unit 140 may include a sensor for sensing a touch input via an input instrument, and a sensor for sensing a touch input by a user. In this case, the sensor for sensing the touch input by the user may be included in the touch screen or the touch pad. Also, the sensor for sensing the touch input via the input instrument may be formed below or in the touch screen or the touch pad.

The communication unit 150 may include one or more elements allowing communication between the device 100 and an external device or between the device 100 and a server (not shown). For example, the communication unit 150 may include a short-range wireless communication unit 151, a mobile communication unit 152, and a broadcast receiving unit 153.

The short-range wireless communication unit 151 may include, but is not limited to, a Bluetooth communication unit, a BLE communication unit, an NFC unit, a WLAN (Wi-Fi) communication unit, a ZigBee communication unit, an infrared Data Association (IrDA) communication unit, a Wi-Fi Direct (WFD) communication unit, an ultra wideband (UWB) communication unit, or an Ant+ communication unit.

The mobile communication unit 152 exchanges a wireless signal with at least one of a base station, an external terminal, and a server on a mobile communication network. The wireless signal may include various types of data according to communication of a sound call signal, a video call signal, or a text/multimedia message.

The broadcast receiving unit 153 receives a broadcast signal and/or information related to a broadcast from the outside through a broadcast channel. The broadcast channel may include a satellite channel and a ground wave channel. In another embodiment, the device 100 may not include the broadcast receiving unit 153.

The A//V input unit 160 may receive an input of an audio signal or a video signal and may include a camera 161 and a microphone 162. The camera 161 may obtain an image frame such as a still image or a moving picture via an image sensor during a video call mode or an image-capturing mode. An image that is captured via the image sensor may be processed by the control unit 130 or a separate image processing unit (not shown).

The image frame that is processed by the camera 161 may be stored in the memory 170 or may be transmitted to an external source via the communication unit 150. According to a configuration of the device 100, two or more cameras 161 may be arranged.

The microphone 162 receives an input of an external sound signal and processes the received sound signal into electrical voice data. For example, the microphone 162 may receive a sound signal from an external device or a speaker. In order to remove noise that occurs while the sound signal is externally input, the microphone 162 may use various noise removing algorithms.

The memory 170 may store a program for processing and controlling the control unit 130, and may store a plurality of pieces of data that are input to or output from the device 100.

The memory 170 may include a storage medium of at least one type selected from a flash memory, a hard disk, a multimedia card type memory, a card type memory such as a secure digital (SD) or xD-Picture (xD) card memory, a random access memory (RAM), a static random access memory (SRAM), a read-only memory (ROM), an electrically erasable programmable read-only memory (EEPROM), a programmable read-only memory (PROM), a magnetic memory, a magnetic disc, and an optical disc. Also, the device 100 may run web storage or a cloud server that performs a storage function of the memory 170 on the Internet.

Programs stored in the memory 170 may be classified into a plurality of modules according to their functions, for example, into a user interface (Ul) module 171, a touch screen module 172, an alarm module 173, etc.

The UI module 171 may provide a specialized UI or graphical user interface (GUI) in connection with the device 100 for each application. The touch screen module 172 may detect a user's touch gesture on the touch screen and transmit information related to the touch gesture to the control unit 130. The touch screen module 172 may recognize and analyze a touch code. The touch screen module 172 may be configured by additional hardware including a controller.

Various sensors may be arranged in or near the touch screen so as to detect a touch or a proximate touch on the touch sensor. An example of the sensor to detect the touch on the touch screen may include a tactile sensor. The tactile sensor detects a contact of a specific object at least as sensitively as a person can detect. The tactile sensor may detect various types of information such as the roughness of a contact surface, the hardness of the contact object, the temperature of a contact point, or the like.

An example of the sensor to detect the touch on the touch screen may include a proximity sensor. The proximity sensor detects the existence of an object that approaches a predetermined detection surface or that exists nearby, by using a force of an electro-magnetic field or an infrared ray, instead of a mechanical contact. Examples of the proximity sensor include a transmission-type photoelectric sensor, a direction reflection-type photoelectric sensor, a mirror reflection-type photoelectric sensor, a high frequency oscillation-type proximity sensor, a capacity-type proximity sensor, a magnetic proximity sensor, an infrared-type proximity sensor, or the like. The touch gesture of the user may include a tap gesture, a touch & hold gesture, a double tap gesture, a drag gesture, a panning gesture, a flick gesture, a drag & drop gesture, a swipe gesture, or the like.

The alarm module 173 may generate a signal for notifying the user about an occurrence of an event in the device 100. Examples of the event that may occur in the device 100 include a call signal receiving event, a message receiving event, a key signal input event, a schedule notifying event, or the like. The alarm module 173 may output an alarm signal in the form of a video signal via the display unit 121, an alarm signal in the form of an audio signal via the sound output unit 122, or an alarm signal in the form of a vibration signal via the vibration motor 123.

The one or more embodiments may be embodied as a recording medium, e.g., a program module to be executed in computers, which include computer-readable commands. The computer storage medium may include any usable medium that may be accessed by computers, volatile and non-volatile medium, and detachable and non-detachable medium. Also, the computer storage medium includes all volatile and non-volatile media, and detachable and non-detachable media which are technically implemented to store information including computer readable commands, data structures, program modules or other data. The communication medium includes computer-readable commands, a data structure, a program module, other data as modulation-type data signals such as carrier signals, or other transmission mechanism, and includes other information transmission mediums.

Throughout the specification, the term 'unit' or 'module' of the like may indicate a hardware component such as a processor or a circuit, and/or may indicate a software component that is executed by a hardware configuration such as a processor.

## Claims

1. A device (100) comprising:
a sound output unit (122) configured to output sound;
a display unit (121) ; and
a control unit (130) configured to:
control the display unit to display a first content in a first window and a second content in a second window, and
in response to receiving a selection of the first window while sound of the second content is being output, stop outputting the sound of the second content and start displaying captions of the second content but not the first content, and output sound of the first content through the sound output unit and enlarge the first window.

2. The device of claim 1, wherein the control unit is further configured to rearrange the windows among the plurality of windows, except for the selected first window, in response to receiving the selection of the first window.

3. The device of any preceding claim, wherein the control unit is further configured to discontinue outputting the sound of the content being reproduced on the selected first window and output sound of content being reproduced on another window when a user input signal that selects the other window is received.

4. The device of claim 3, wherein the other window is distinguished from the selected first window.

5. The device of claim 1, wherein the control unit is further configured to set one of the plurality of windows as a sub-window, set one of the plurality of windows that is distinguished from the sub-window as a main window, and display the sub-window on the main window.

6. The device of claim 5, wherein the sub-window overlaps the main window.

7. The device of claim 5 or claim 6, wherein the control unit is further configured to display captions being reproduced on the sub-window on a previously determined portion of an entire area of the display unit when a user input signal that selects the sub-window is received.

8. A method comprising:
controlling a display unit to display a first content in a first window and a second content in a second window; and
in response to receiving a selection of the first window while sound of the second content is being output, stopping outputting the sound of the second content and starting displaying captions of the second content but not the first content, and outputting sound of the first content and enlarging the first window.

## Patentansprüche

1. Vorrichtung (100), umfassend:
eine Tonausgabeeinheit (122), die konfiguriert ist, um Ton auszugeben;
eine Anzeigeeinheit (121); und
eine Steuereinheit (130), die konfiguriert ist, um:
die Anzeigeeinheit zu steuern, um einen ersten Inhalt in einem ersten Fenster und einen zweiten Inhalt in einem zweiten Fenster anzuzeigen, und
in Reaktion auf das Empfangen einer Auswahl des ersten Fensters bei der Tonausgabe des zweiten Inhalts das Ausgeben des Tons des zweiten Inhalts zu beenden und damit zu beginnen, Untertitel des zweiten Inhalts, aber nicht des ersten Inhalts, anzuzeigen und den Ton des ersten Inhalts über die Tonausgabeeinheit auszugeben und das erste Fenster zu vergrößern.

2. Vorrichtung nach Anspruch 1, wobei die Steuereinheit ferner konfiguriert ist, um die Fenster unter der Vielzahl von Fenstern mit Ausnahme des ausgewählten ersten Fensters in Reaktion auf das Empfangen der Auswahl des ersten Fensters neu anzuordnen.

3. Vorrichtung nach einem der vorhergehenden Ansprüche, wobei die Steuereinheit ferner konfiguriert ist, um das Ausgeben des Tons des in dem ausgewählten ersten Fenster wiedergegebenen Inhalts zu unterbrechen und den Ton des in dem anderen Fenster wiedergegebenen Inhalts auszugeben, wenn ein Benutzereingabesignal empfangen wird, welches das andere Fenster auswählt.

4. Vorrichtung nach Anspruch 3, wobei sich das andere Fenster von dem ausgewählten ersten Fenster unterscheidet.

5. Vorrichtung nach Anspruch 1, wobei die Steuereinheit ferner konfiguriert ist, um eines der Vielzahl von Fenstern als ein Unterfenster einzustellen, eines der Vielzahl von Fenstern, das sich von dem Unterfenster unterscheidet, als ein Hauptfenster einzustellen und das Unterfenster in dem Hauptfenster anzuzeigen.

6. Vorrichtung nach Anspruch 5, wobei das Unterfenster das Hauptfenster überlappt.

7. Vorrichtung nach Anspruch 5 oder Anspruch 6, wobei die Steuereinheit ferner konfiguriert ist, um in dem Unterfenster wiedergegebene Untertitel in einem zuvor bestimmten Abschnitt eines gesamten Bereichs der Anzeigeeinheit anzuzeigen, wenn ein Benutzereingabesignal empfangen wird, welches das andere Fenster auswählt.

8. Verfahren, umfassend:
Steuern einer Anzeigeeinheit, um einen ersten Inhalt in einem ersten Fenster und einen zweiten Inhalt in einem zweiten Fenster anzuzeigen; und
in Reaktion auf das Empfangen einer Auswahl des ersten Fensters bei der Tonausgabe des zweiten Inhalts, Beenden des Ausgebens des Tons des zweiten Inhalts und Beginnen damit, Untertitel des zweiten Inhalts, aber nicht des ersten Inhalts, anzuzeigen, und Ausgeben des Tons des ersten Inhalts über die Tonausgabeeinheit und Vergrößern des ersten Fensters.

## Revendications

1. Dispositif (100), comprenant :
une unité d'émission de sons (122) configurée pour émettre un son ;
une unité d'affichage (121) ; et
une unité de commande (130), configurée pour :
contrôler l'unité d'affichage afin d'afficher un premier contenu dans une première fenêtre et un second contenu dans une seconde fenêtre, et
en réponse à la réception d'une sélection de la première fenêtre pendant que le son du second contenu est émis, arrêter de diffuser le son du second contenu et commencer à afficher les légendes du second contenu mais non du premier contenu et émettre le son du premier contenu à travers l'unité d'émission de sons et agrandir la première fenêtre.

2. Dispositif selon la revendication 1, dans lequel l'unité de commande est en outre configurée pour réorganiser les fenêtres parmi la pluralité de fenêtres, à l'exception de la première fenêtre sélectionnée, en réponse à la réception de la sélection de la première fenêtre.

3. Dispositif selon l'une quelconque des revendications précédentes, dans lequel l'unité de commande est en outre configurée pour interrompre l'émission du son du contenu reproduit sur la première fenêtre sélectionnée et produire un son du contenu reproduit sur une autre fenêtre lorsque l'on reçoit un signal d'entrée d'utilisateur qui sélectionne l'autre fenêtre.

4. Dispositif selon la revendication 3, dans lequel l'autre fenêtre se distingue de la première fenêtre sélectionnée.

5. Dispositif selon la revendication 1, dans lequel l'unité de commande est en outre configurée pour définir une fenêtre parmi la pluralité de fenêtres en tant que sous-fenêtre, pour définir une fenêtre parmi la pluralité de fenêtres distinctes de la sous-fenêtre en tant que fenêtre principale, et afficher la sous-fenêtre sur la fenêtre principale.

6. Dispositif selon la revendication 5, dans lequel la sous-fenêtre recouvre la fenêtre principale.

7. Dispositif selon la revendication 5 ou la revendication 6, dans lequel l'unité de commande est en outre configurée pour afficher des légendes reproduites sur la sous-fenêtre sur une partie préalablement déterminée d'une zone entière de l'unité d'affichage lorsque l'on reçoit un signal d'entrée de l'utilisateur qui sélectionne la sous-fenêtre.

8. Procédé comprenant :
le contrôle de l'unité d'affichage afin d'afficher un premier contenu dans une première fenêtre et un second contenu dans une seconde fenêtre, et
en réponse à la réception d'une sélection de la première fenêtre pendant que le son du second contenu est émis, l'arrêt de la diffusion du son du second contenu et le début de l'affichage des légendes du second contenu mais non du premier contenu et l'émission des sons du premier contenu avec l'agrandissement de la première fenêtre.
